# EUROPEAN PATENT APPLICATION

(11) **EP 3 896 708 A1**
(43) Date of publication of application: **20.10.2021**
(21) Application number: 19897094.9
(22) Date of filing: 10.10.2019
(51) Int. Cl.: H01G 9/20

(54) **SEPARATOR COMPOSITION, SEPARATOR, AND MANUFACTURING METHOD AND USE THEREOF**

(30) Priority: 12.12.2018 JP 2018232676
(71) Applicant: Daicel Corporation, Osaka-shi, Osaka 530-0011 (JP)
(72) Inventor: FUKUI, Kazuhisa, Tokyo 108-8230 (JP)
(74) Representative: Grünecker Patent- und Rechtsanwälte PartG mbB
(86) International application number: PCT/JP2019/039952
(87) International publication number: WO 2020/121636

(57) **Abstract**

Provided is a separator composition that is capable of forming a separator capable of improving the photoelectric conversion efficiency of a photoelectric conversion element such as a dye-sensitized solar cell without being subjected to firing. Prepared is a separator composition including: at least one type of non-conductor particles selected from the group consisting of polymer particles and ceramic particles; and an ionic polymer, and the ionic polymer having a proportion from 0.1 to 30 parts by weight with respect to 1 part by weight of the non-conductor particles. A membranous separator may be prepared by coating a support with the composition without sintering. The non-conductor particles may be insulating inorganic oxide particles. A photoelectric conversion layer 2 may be stacked on a conductive substrate 1, the membranous separator 3 may be stacked on the photoelectric conversion layer to produce a laminate, and this laminate may be used to fabricate a photoelectric conversion element.

## Description

### Technical Field

The present invention relates to a separator composition that constitutes a photoelectric conversion element such as a solar cell (in particular, a dye-sensitized solar cell), a separator formed from the composition, and a method of manufacturing the separator and a use thereof.

### Background Art

In photoelectric conversion elements such as dye-sensitized solar cells, opposed cells are employed, and the cells are each formed from an electrode (working electrode or photoelectrode) with an electric conversion layer, an electrode (counter electrode) disposed on an opposite side of the photoelectric conversion layer of the working electrode, and an electrolyte solution interposed between the electrodes and subjected to a sealing treatment. The electrolyte solution is typically enclosed in the space or void formed by sealing with a separator (or spacer) interposed at the edges of both electrodes.

As such a dye-sensitized solar cell element including a separator, for example, JP 6143911 B (Patent Document 1) discloses a dye-sensitized solar cell including: a first electrode that includes a transparent substrate and a transparent conductive film provided on one surface of the transparent substrate; a second electrode that includes a metal substrate and is opposed to the first electrode; an oxide semiconductor layer provided on the first electrode or the second electrode; an annular sealing part that joins the first electrode and the second electrode; and an electrolyte disposed in a space surrounded by the first electrode, the second electrode, and the sealing part. This document illustrates therein, as a material constituting the sealing part, resins such as ionomers, modified polyolefin resins including ethylene-vinyl acetic anhydride copolymers, ethylene-methacrylic acid copolymers, ethylene-vinyl alcohol copolymers, and the like, ultraviolet curing resins, and vinyl alcohol polymers. It is described that the thickness of the sealing part is typically from 40 to 90 µm and preferably from 60 to 80 µm.

With this separator, however, the transmitted light is mostly absorbed by the electrolyte solution, which may cause occurrence of light loss, and the reflected and scattered light from the counter electrode is also absorbed by the electrolyte solution, which may cause occurrence of light loss. Moreover, the electrical resistance is also increased because of the large distance between the electrodes. Thus, a battery including this separator has a decreased battery output (current value).

In contrast, also proposed is a dye-sensitized solar cell with a separator stacked by printing on the surface of a working electrode without providing the separator as a spacer at the edge of the electrode. JP 5050301 B (Patent Document 2) discloses a dye-sensitized solar cell in which multiple cells each including a photoelectrode, a separator, and a counter electrode are connected in series on a glass substrate with a transparent conductive film, in which a first photoelectrode made of a dense material is stacked on the transparent conductive film, a second photoelectrode made of a porous material is stacked on the first photoelectrode, a separator made of a porous material is stacked on the second photoelectrode, a counter electrode made of a porous carbon layer is stacked on the separator, a photosensitizing dye is supported on the first photoelectrode and the second photoelectrode, the space between the transparent conductive film and the counter electrode is filled with an electrolyte, and in which the average particle size of the constituent particles of the first photoelectrode is smaller than the average particle size of the constituent particles of the second photoelectrode, and the average pore size of the first photoelectrode is smaller than the average pore size of the second photoelectrode, and smaller than the average particle size of the carbon secondary particles of the counter electrode. For the separator in this document, a paste including titanium oxide particles of 100% rutile with an average particle size of 250 nm or greater, zirconium oxide particles with an average particle size of 20 nm, and a cellulosic binder is applied by screen-printing onto the second photoelectrode, and subjected to firing at 450°C to form a thin porous layer with an average thickness from 3 to 7 µm.

This separator, however, requires firing for the manufacture, and has low productivity, and moreover, it is not possible to use the separator for materials with low heat resistance.

### Citation List

### Patent Document

Patent Document 1: JP 6143911 B (claim 1, paragraphs [0046], [0115], and [0116])
Patent Document 2: JP 5050301 B (claim 1, paragraph [0061])

### Summary of Invention

### Technical Problem

Accordingly, an object of the present invention is to provide a separator composition that is useful for forming a separator that is capable of improving the photoelectric conversion efficiency of a photoelectric conversion element such as a dye-sensitized solar cell without being subjected to firing, a separator formed from the composition, and a method of manufacturing the separator and a use thereof.

Another object of the present invention is to provide a separator composition that allows a thin and highly adhesive membranous separator to be stacked on a molded body with low heat resistance by a simple method, a separator formed from the composition, and a method of manufacturing the separator and a use thereof.

### Solution to Problem

As a result of diligent research for achieving the objects mentioned above, the inventor has found that a separator is formed from a composition in which polymer particles and/or ceramic particles are combined with an ionic polymer at a specific ratio, thereby allowing the photoelectric conversion efficiency of a photoelectric conversion element such as a dye-sensitized solar cell to be improved without firing, and thus achieved the present invention.

More specifically, the separator composition according to the present invention is a separator composition for forming a separator, the composition including: at least one type of non-conductor particles selected from polymer particles and ceramic particles; and an ionic polymer, the ionic polymer having a proportion from 0.1 to 30 parts by weight with respect to 1 part by weight of the non-conductor particles. The non-conductor particles may be inorganic oxide particles. The non-conductor particles may include insulator particles, and the proportion of the insulator particles may be 10% by volume or more of the non-conductor particles. The non-conductor particles may have an average particle size of 10 nm or more. The ionic polymer may be an anionic polymer (in particular an anionic polymer that has a pH of 5 or higher in an aqueous solution or a water dispersion at 25°C). The ionic polymer may be a strongly acidic ion exchange resin (in particular, a fluorine-containing resin that has a pH of 6 or higher in an aqueous solution or a water dispersion at 25°C, and has a sulfo group). The proportion of the ionic polymer may be from 0.25 to 15 parts by weight (in particular, from 0.5 to 8 parts by weight) with respect to 1 part by weight of the non-conductor particles. The particles may include small non-conductor particles of less than 100 nm in particle size and large non-conductor particles of 100 nm or greater in particle size.

The present invention also encompasses a separator including the composition. The separator may be membranous. The present invention also encompasses a method of manufacturing the separator, by which a membranous separator is obtained by coating a support with the composition without sintering.

The present invention also encompasses a laminate including a conductive substrate, a photoelectric conversion layer stacked on the conductive substrate, and the membranous separator stacked on the photoelectric conversion layer. The membranous separator may be from 0.1 to 100 µm in average thickness. Furthermore, the present invention also encompasses a photoelectric conversion element including this laminate.

Note that, in this specification and the claims, the non-conductor is used in a sense including insulators and semiconductors.

### Advantageous Effects of Invention

According to the present invention, the polymer particles and/or the ceramic particles are combined with the ionic polymer at a specific ratio, thus allowing a separator to be formed without firing. The obtained separator with a light scattering function can also be adjusted to be thin, and thus, its use as a separator for a photoelectric conversion element such as a dye-sensitized solar cell allows the photoelectric conversion efficiency to be improved, and in particular, the output of the dye-sensitized solar cell to be improved. In addition, since no firing is required, a thin and highly adhesive membranous separator can also be stacked on a molded body with low heat resistance by a simple method.

### Brief Description of Drawings

FIG. 1 is a schematic diagram illustrating an example of a stacked solar cell according to an embodiment the present invention.
FIG. 2 is a schematic diagram illustrating an example of an opposed solar cell according to an embodiment the present invention.
FIG. 3 is a graph of comparison of output characteristics of solar cells obtained in examples.

### Description of Embodiments

### [Non-conductor particles]

The separator composition according to an embodiment of the present invention includes non-conductor particles (or weak conductor particles), and the non-conductor particles forms the main framework of a separator, thereby allowing the retention or permeability for an electrolyte solution or the like to be imparted to the separator. The non-conductor particles are at least one type selected from polymer particles and ceramic particles.

Examples of the polymer constituting the polymer particles include thermoplastic resins, crosslinked thermoplastic resins, thermosetting resins, and rubbers.

Examples of the thermoplastic resins include olefin-based resins, (meth)acrylic resins, styrene-based resins, fatty acid vinyl ester-based resins, polyester-based resins, polyamide-based resins, polyamide-imide-based resins, polyacetal-based resins, polycarbonate-based resins, polysulfone-based resins, polyphenylene ether-based resins, thermoplastic polyurethane resins, thermoplastic elastomers (polyolefin-based elastomers, polystyrene-based elastomers, polyester-based elastomers, polyamide-based elastomers, polyurethane-based elastomers, and the like), and cellulose derivatives.

The crosslinked thermoplastic resin may be crosslinked products or the like of the thermoplastic resins, and may be, depending on the types of the thermoplastic resins, crosslinked products obtained with the use of typically used crosslinking agents, crosslinked products obtained with the use of active energy beams such as electron beams, or the like. Examples of the crosslinked thermoplastic resins include crosslinked polyolefin-based resins, crosslinked poly(meth)acrylic resins, and crosslinked polystyrene-based resins.

Examples of the thermosetting resins include phenolic resins, melamine resins, urea resins, benzoguanamine resins, silicone resins, epoxy resins, vinyl ester resins, and polyurethane resins.

Examples of the rubbers include diene-based rubbers (polybutadiene, polyisoprene, styrene-butadiene rubbers, and the like), ethylene-propylene rubbers, ethylene-vinyl acetate rubber-like copolymers, butyl rubbers, nitrile rubbers, chlorosulfonated polyethylene, epichlorohydrin rubbers, polysulfide rubbers, acrylic rubbers, urethane rubbers, silicone rubbers, and fluororubbers.

These polymer particles can be used alone, or two or more thereof can be used in a combination. Among these polymer particles, the crosslinked thermoplastic particles such as crosslinked polyethylene particles, crosslinked polymethyl methacrylate particles, crosslinked polystyrene particles, and the like are widely used.

Examples of the ceramics constituting the ceramic particles include inorganic oxides, nitrogen compounds, carbon compounds, carbonates, minerals, glass, and silicon.

Examples of the inorganic oxides (or metal oxides) include beryllium oxides, magnesium oxides or magnesia, silicon oxides or silica (SiO₂), aluminum oxides or alumina, titanium oxides (TiO₂) or titania, zirconium oxides or zirconia, magnesium oxides or magnesia, manganese oxides, zinc oxides, and cerium oxides.

Examples of the nitrogen compounds include boron nitrides, aluminum nitrides, silicon nitrides, carbon nitride, and titanium nitrides.

Examples of the carbon compounds include silicon carbides, fluorine carbides, boron carbide, titanium carbides, tungsten carbides, and diamond.

Examples of the carbonates include calcium carbonates, barium carbonates, and magnesium carbonates.

Examples of the minerals include talc, mica, zeolite, ferrite, tourmaline, diatomaceous earth, pyrogenic earth, activated clays, kaolin, pyrophyllite, sericite, bentonite, smectite, montmorillonite, clays, red iron oxides, quartz, and wollastonite.

Examples of the glass include soda-lime glass, lead glass, borosilicate glass, and silica glass.

These ceramic particles can be used alone, or two or more thereof can be used in a combination.

Among these particles, from the perspective of excellent mechanical properties and heat resistance, ceramic particles are preferred, and inorganic oxide particles such as silica particles, alumina particles, and titania particles are particularly preferred.

The non-conductor particles preferably include insulator particles from the perspective of allowing the non-conductivity required for separators to be ensured and allowing decrease of the photoelectric conversion efficiency to be suppressed in the case where the separator composition is used as the separators for photoelectric conversion elements (in particular, dye-sensitized solar cell elements). The insulator particles are required to be particles with at least surfaces formed from an insulator, which may be particles formed from an insulator alone (silica particles, alumina particles, or the like), or may be composite particles with only surfaces formed from an insulator. For example, conductor or semiconductor particles (in particular, semiconductor particles such as titania particles) of which surfaces are coated with an insulator (for example, an insulating inorganic oxide such as alumina) can be used as composite particles.

The proportion of the insulator particles may be, from the perspective of allowing decrease of the photoelectric conversion efficiency to be suppressed in the case where the separator composition is used as a separator for a photoelectric conversion element (in particular, a dye-sensitized solar cell element), 10% by volume or more (from 10% by volume to 100% by volume) of the non-conductor particles, and is, for example, approximately from 10% by volume to 90% by volume, preferably from 20 to 80% by volume, more preferably from 30 to 70% by volume, and most preferably from 40 to 60% by volume.

The non-conductor particles may be only insulator particles, but preferably a combination of insulator particles and semiconductor particles (in particular titania particles) from the perspective of allowing the adhesion between a separator and a photoelectric conversion layer in the case where the separator composition is used as a separator for a photoelectric conversion element (in particular, a dye-sensitized solar cell element). In the case of combining the both particles, the ratio by weight thereof is, for example, insulator particles/semiconductor particles = approximately from 90/10 to 10/90, preferably from 80/20 to 20/80, more preferably from 70/30 to 30/70, and most preferably from 60/40 to 40/60. There is a risk that the non-conductivity of the separator may be decreased if the proportion of the insulator particles is excessively low, whereas there is a risk that the adhesion between the separator and the photoelectric conversion layer may be decreased if the proportion of the insulator particles is excessively high.

The non-conductor particles may be either non-porous or porous. The nitrogen adsorption specific surface area of the non-conductor particles in accordance with the BET method may be 3 m²/g or greater, and is, for example, approximately from 3 to 400 m²/g, preferably from 5 to 200 m²/g, more preferably from 10 to 100 m²/g, and most preferably from 30 to 80 m²/g. In a case where the specific surface area is excessively small, there is a possibility that the electrolyte solution retention capacity of the separator may be decreased.

Examples of the shape of the non-conductor particles include particle or powdered shapes, plate-like or scale-like, fibrous, and indefinite shapes. Among these forms, the particle shape is preferred from the perspective of easily forming voids for retaining an electrolyte solution in the separator. The particle forms may be, for example, spherical (substantially spherical, truly spherical, or the like), ellipsoidal, polyhedral (polygonal, cuboid, regular polyhedral, rectangular parallelepipedal, or the like), or the like, and are preferably spherical or ellipsoidal.

The average particle size (number average primary particle size) of the non-conductor particles may be 10 nm or greater (in particular, 50 nm or greater), and is, for example, approximately from 10 to 500 nm, preferably from 30 to 300 nm, even more preferably from 40 to 200 nm, and most preferably from 50 to 100 nm. The excessively small average particle size of the non-conductor particles has the possibility of decreasing the effect of improving the photoelectric conversion efficiency by the light scattering function, whereas the excessively large average particle size has the possibility of making it difficult to form a porous substance with a lot of voids.

To easily form a porous substance and to improve the photoelectric conversion efficiency, the non-conductor particles preferably have a combination of small particles (for example, small ceramic particles) of less than 100 nm (for example, 10 nm or greater and less than 100 nm) in particle size and large particles (for example, large ceramic particles) of 100 nm or greater in particle size (for example, from 100 to 1000 nm).

The average particle size (volume average primary particle size) of the small particles is, for example, approximately from 5 to 80 nm, preferably from 10 to 50 nm, and more preferably from 20 to 40 nm. The average particle size (volume average primary particle size) of the large particles is, for example, approximately from 110 to 500 nm, preferably from 130 to 300 nm, and more preferably from 150 to 250 nm.

Note that in this specification and the claims, the average particle sizes and the particle size distributions can be measured by a laser diffraction scattering method or the like.

The ratio by weight of the small particles to the large particles is former/latter = approximately from 90/10 to 10/90, preferably from 80/20 to 20/80, more preferably from 70/30 to 30/70, and most preferably from 60/40 to 40/60. The excessively low ratio of the small particles has the risk of making it difficult to form a porous substance with a lot of voids, whereas the excessively high ratio thereof has the risk of decreasing the effect of improving the photoelectric conversion efficiency by the light scattering function.

The small particles may be ceramic particles that serve as an insulator, for example, inorganic oxide particles that serve as an insulator, such as silica particles and alumina particles. In contrast, the large particles may be ceramic particles that serve as a semiconductor, for example, metal oxide particles that serve as a semiconductor, such as titania particles.

### [Ionic polymer]

The separator composition according to an embodiment of the present invention comprises an ionic polymer in addition to the non-conductor particles. The non-conductor particles and the ionic polymer are combined, thereby allowing the separator to be formed without firing. Furthermore, thin film formation is allowed to be achieved, and adhesion with the photoelectric conversion layer can be also improved.

The ionic polymer (ionic polymer) is required to be a polymer (i.e., a polyelectrolyte) having ionicity (electrolytic property), which may be any of anionic polymers, cationic polymers, amphoteric polymers (such as a polymer having both a carboxyl group and an amino group).

According to the present invention, the ionic polymer may be selected depending on the type of the ionic polymer included in the photoelectric conversion layer, and from the perspective of adhesion with the photoelectric conversion layer, the same type of or identical (in particular, identical) ionic polymer as or to the ionic polymer included in the photoelectric conversion layer is preferred. As the ionic polymer, an anionic polymer or a cationic polymer is typically used, and an anionic polymer is preferred. In particular, the ionic polymer may be an ion exchange resin (ion exchanger or solid polymeric electrolyte).

The anionic polymer is typically a polymer having an acid group [such as a carboxyl group, a sulfo group (or a sulfonate group)]. The anionic polymer may have an acid group (or acidic group) alone or two or more types of acid groups in combination. Note that the acid group may be partially or entirely neutralized.

Typical anionic polymers may be cation exchange resins such as cation-type ion exchange resins and acid-type ion exchange resins. The cation exchange resins include strongly acidic cation exchange resins and weakly acidic cation exchange resins.

The strongly acidic ion exchange resin may be fluorine-containing resins having a sulfo group or styrene-based resins having a sulfo group.

Examples of the fluorine-containing resins having a sulfo group include fluorosulfonic acid resins (in particular, perfluorosulfonic acid resins) such as a copolymer of a fluoroalkene and a sulfofluoroalkyl-fluorovinyl ether [for example, a tetrafluoroethylene-[2-(2-sulfotetrafluoroethoxy)hexafluoropropoxy]trifluoroethylene copolymer (for example, a graft copolymer)]. The fluorine-containing resins having a sulfo group are available from DuPont under the trade name "Nafion" series.

Examples of the styrene-based resins having a sulfo group include a polystyrenesulfonic acid and a sulfonated product of a crosslinked styrene-based polymer (for example, a sulfonated product of a styrene-divinylbenzene copolymer).

The weakly acidic cation exchange resins may be ion exchange resins having a carboxyl group. Examples of the ion exchange resins having a carboxyl group include (meth)acrylic acid polymers [for example, a copolymer of a (meth)acrylic acid and another copolymerizable monomer (such as a crosslinkable monomer) such as a poly(meth)acrylic acid; methacrylic acid-divinylbenzene copolymer and an acrylic acid-divinylbenzene copolymer], and fluorine-containing resins having a carboxyl group (perfluorocarboxylic acid resins).

These ionic polymers can be used alone, or two or more thereof can be used in a combination. Among these polymers, the anionic polymers are preferred, the strongly acidic ion exchange resins are more preferred, and the fluorine-containing resins having a sulfo group are most preferred.

Note that in the case where the ionic polymer is composed of an anionic polymer, the ionic polymer may be composed of only an anionic polymer, or a combination of an anionic polymer and another ionic polymer (for example, an amphoteric polymer or the like). In the case of the combination, the proportion of anionic polymer to the entire ionic polymers may be, for example, 30% by weight or greater (for example, from 40 to 99% by weight), preferably 50% by weight or greater (for example, from 60 to 98% by weight), more preferably 70% by weight or greater (for example, from 80 to 97% by weight).

The ionic polymer may be acidic, neutral, or alkaline. In particular, an ionic polymer with a relatively high pH (such as an anionic polymer) may be suitably used in the present invention. The pH (25°C) of such an ionic polymer may be, for example, approximately 3 or higher (for example from 4 to 14), preferably 5 or higher (for example, from 6 to 14), and more preferably 7 or higher (for example, from 7 to 14).

In particular, the pH (25°C) of an anionic polymer (for example, a strongly acidic ion exchange resin) or the ionic polymer composed of an anionic polymer may be, for example, 3 or higher (for example, from 4 to 14), preferably 5 or higher (for example, from 5 to 13), more preferably 6 or higher (for example, from 6.5 to 12), in particular, 7 or higher (for example, from 7 to 12), or typically, approximately from 6 to 14 (for example, from 6.5 to 11, preferably from 7 to 9).

The pH may be a value in an aqueous solution or a water dispersion of the ionic polymer (or a value in a solvent containing water). In other words, the pH may be a value (pH) in a solution (such as an aqueous solution) or a dispersion (such as a water dispersion) in which the ionic polymer is dissolved or dispersed in water or a solvent containing water at 25°C.

The pH can be adjusted by typically used methods (for example, a method of neutralizing the acid group of the anionic polymer with an appropriate base).

The pH adjustment method is not particularly limited, and can be performed by known methods (for example, a method of neutralizing the acid group with an appropriate base, or a method of neutralizing the basic group with an appropriate acid). Note that, in the neutralized acid group, the counter ion is not particularly limited, and may be, for example, an alkali metal (for example, sodium or potassium).

The ionic polymer (in particular, anionic polymer) may have a crosslinked structure [for example, the exemplary (meth)acrylic acid-divinylbenzene copolymer or sulfonated product of styrene-based polymer], or may have no crosslinked structure. In particular, an ionic polymer that has no crosslinked structure (or has a very low degree of crosslinking) may be suitably used in the present invention.

In the ionic polymer (ion exchange resin), the ion exchange capacity may be approximately from 0.1 to 5.0 meq/g (for example, from 0.15 to 4.0 meq/g), preferably from 0.2 to 3.0 meq/g (for example, 0.3 to 2.0 meq/g), more preferably from 0.4 to 1.5 meq/g, and particularly from 0.5 to 1.0 meq/g.

Note that the molecular weight of the ionic polymer is not particularly limited as long as the molecular weight falls within a range such that the ionic polymer can be dissolved or dispersed in the solvent.

The proportion of the ionic polymer is, for example, approximately from 0.1 to 30 parts by weight, preferably from 0.25 to 15 parts by weight, more preferably from 0.3 to 12 parts by weight, even more preferably from 0.4 to 10 parts by weight, yet even more preferably from 0.5 to 8 parts by weight, and most preferably from 3 to 8 parts by weight, with respect to 1 part by weight of the non-conductor particles. The excessively low proportion of the ionic polymer has the risk of decreasing the effect of improving the film formability, whereas the excessively high proportion of the ionic polymer has the risk of decreasing the non-conductivity of the separator.

### [Other components]

The separator composition according to an embodiment of the present invention may further contain a solvent in addition to the non-conductor particles and the ionic polymer. The solvent may be water, or may be an organic solvent.

Examples of the organic solvent include alcohol-based solvents (for example, alkanols such as methanol, ethanol, isopropanol, and butanol), aromatic solvents (for example, aromatic hydrocarbons such as toluene and xylene), ester-based solvents (for example, acetate esters such as ethyl acetate, butyl acetate, and propylene glycol monomethyl ether monoacetate), ketone-based solvents (for example, chain ketones such as acetone; cyclic ketones such as cyclohexanone), ether-based solvents (for example, chain ethers such as propylene glycol monomethyl ether and diethylene glycol dimethyl ether; cyclic ethers such as dioxane and tetrahydrofuran), halogen-based solvents (for example, haloalkanes such as dichloromethane and chloroform), nitrile-based solvents (for example, acetonitrile, benzonitrile), and nitro-based solvents (for example, nitrobenzene).

These solvents can be used alone, or two or more thereof can be used in combination. Among these solvents, from the perspective of handleability and the like, water and/or aqueous solvents (such as a lower alcohols) are widely used, and a mixed solvent of water and a C₁₋₄ alkanol such as isopropanol is preferred.

In the case where the composition includes a solvent, the proportion of the solid content (and non-volatile component) can be selected appropriately depending on the coating method and the like for forming the separator, and may be, for example, approximately from 0.1 to 90% by weight, preferably from 1 to 50% by weight, more preferably from 5 to 40% by weight, and most preferably from 10 to 30% by weight. According to the present invention, the proportion of the ionic polymer can be relatively increased, and thus, the dispersion stability of the non-conductor particles can be sufficiently ensured, even if the solid content including the non-conductor particles is high in concentration.

The pH of the composition including the solvent is not particularly limited, but may be relatively high pH as mentioned above. For example, the pH (25°C) of the composition including the solvent (in particular, water) may be, for example, approximately 3 or higher (for example from 4 to 14), preferably 5 or higher (for example, from 6 to 14), more preferably 7 or higher (for example, from 7 to 14). In particular, in the case where the ionic polymer is comprised of an anionic polymer, the pH (25°C) of the composition including the solvent (in particular, an aqueous composition including water) may be, for example 3 or higher (for example, from 4 to 14), preferably 5 or higher (for example, from 5 to 13), more preferably be 6 or higher (for example, from 6.5 to 12), and particularly, 7 or higher (for example, from 7 to 12), and may be typically approximately from 6 to 14 (for example, from 6.5 to 11, and preferably from 7 to 9).

The separator composition according to an embodiment of the present invention may further include typically used additives to such the extent that the conductivity, porosity, adhesion, and the like are not impaired. Examples of the typically used additives include binders, adhesion modifiers, colorants, fibrous fillers, flame retardants, colorants, stabilizers, and dispersants. The total proportion of the additives is approximately 10% by weight or less (for example, from 0.01 to 10% by weight) in the composition.

### [Separator]

The separator according to an embodiment of the present invention is required to include the separator composition mentioned above, and may be formed from only the separator composition, or may be a combination of a separator formed from the separator composition and another separator. The other separator can be selected appropriately depending on the intended use, but in the case of a photoelectric conversion element such as a dye-sensitized solar cell, the separator may be formed from only the separator composition.

The shape of the separator is not particularly limited, and can be selected depending on the intended use, but the form of a membrane is preferred from the perspective of being easily formed by coating. The membranous separator is obtained by coating a support with the separator composition. According to the present invention, a separator can be obtained by only drying after the coating, and a membranous separator can be formed without making the non-conductor particles sintered (or fired). More specifically, according to the present invention, a separator can be formed by a simple method without heat treatment at high temperatures (for example, 400°C or higher), and even in the case of a support with low heat resistance, a separator firmly attached on the support can be formed.

The coating method is not particularly limited, and examples thereof include air knife coating methods, roll coating methods, gravure coating methods, blade coating methods, doctor blade methods, squeegee methods, dip coating methods, spray methods, spin coating methods, and inkjet printing methods. After the coating, the composition may be dried at a predetermined temperature (for example, approximately from room temperature to 150°C).

The separator composition for coating may be mixed for dispersion treatment by a known method using ultrasonic waves or the like.

The average thickness of the membranous separator is not particularly limited, and depending on the intended use, can be selected from a range of approximately from 0.1 to 100 µm, for example, but a thin separator can be also easily formed by coating, and the thickness thereof may be, for example, approximately from 0.1 to 50 µm, preferably from 0.5 to 30 µm, more preferably from 1 to 20 µm, and most preferably from 3 to 10 µm.

### [Laminate]

The support may be a photoelectric conversion layer (in particular, a photoelectric conversion layer stacked on the conductive substrate). In the case where a separator is utilized in a photoelectric conversion element, the laminate according to an embodiment of the present invention may be a laminate including a conductive substrate, a photoelectric conversion layer stacked on the conductive substrate, and the membranous separator stacked on the photoelectric conversion layer.

### (Conductive Substrate)

The conductive substrate may be composed of only a conductor (or a conductive layer), but typical examples of the conductive substrate include a substrate obtained by forming a conductor layer (conductive layer or conductive film) on a substrate that serves as a base (base substrate). Note that in such a case, the photoelectric conversion layer is formed on the conductive layer.

The conductor (conductive agent) can be selected appropriately depending on the intended use, but examples of the conductor include conductors such as conductive metal oxides [for example, tin oxides, indium oxides, zinc oxides, antimony-doped metal oxides (such as antimony-doped tin oxides), tin-doped metal oxides (such as tin-doped indium oxides), aluminum-doped metal oxides (such as aluminum-doped zinc oxides), gallium-doped metal oxides (such as gallium-doped zinc oxide), and fluorine-doped metal oxides (such as fluorine-doped tin oxide)]. These conductors may be used alone, or two or more thereof may be used. Note that the conductor may be typically a transparent conductor.

Examples of the base substrate include inorganic substrates (for example, glass or the like) and organic substrates [for example, polyester-based resins (for example, polyethylene terephthalate, polyethylene naphthalate), polycarbonate resins, cycloolefin-based resins, polypropylene-based resins, cellulosic resins (such as cellulose triacetate), polyether-based resins (such as polyethersulfone), polysulfide-based resins (such as polyphenylene sulfide), substrates or films formed from plastics such as polyimide resins (plastic substrates or plastic films)]. In the present invention, a plastic substrate (plastic film) can be used as the base substrate because the sintering process for the semiconductor is not required.

### (Photoelectric Conversion Layer)

The photoelectric conversion layer is not particularly limited, and photoelectric conversion layers formed from various inorganic and organic materials can be used, but a photoelectric conversion layer including a semiconductor and an ionic polymer is preferred from the perspective of being manufactured without sintering as for the separator according to an embodiment of the present invention and being excellent in adhesion with the separator.

As the semiconductor, semiconductors for use as photoelectric conversion layer elements in known manners can be used, and metal oxides are preferred, and metal oxides (metal oxides with transparency) are preferred. Examples of such metal oxides include titanium oxides (TiO₂), zinc oxides (ZnO), tin oxides (SnO₂), indium oxides (In₂O₃), gallium oxides (Ga₂O₃), copper-aluminum oxides (CuAlO₂), iridium oxides (IrO), nickel oxides (NiO), and products doped with these metal oxides.

In addition, among semiconductors, an n-type semiconductor may be suitably used. In particular, in the present invention, an n-type metal oxide semiconductor such as a titanium oxide (TiO₂) may be suitably used.

The crystalline form (crystalline type) of the titanium oxide may be any of the rutile type (rutile type), anatase type (anatase type), and brookite type (brookite type). In the present invention, rutile-type or anatase-type titanium oxides can be suitably used. The use of an anatase-type titanium oxide makes it easy to maintain the high adhesion of the semiconductor to the substrate over a long period of time. In contrast, rutile-titanium oxides are likely to be oriented, thereby allowing the contact area of the titanium oxide to be relatively increased, and may be thus suitably used in terms of conductivity and durability.

Note that the titanium oxide may be a titanium oxide doped with another element.

The shape of the semiconductor (for example, a metal oxide such as a titanium oxide) is not particularly limited, and may be particle, fibrous (needle-like or rod-like), plate-like, or the like. Among these shapes, a particulate or needle-like shape is preferred, and a particle shape is particularly preferred.

The average particle size (volume average primary particle size) of the semiconductor particles can be selected from a range of approximately from 1 to 1000 nm, and is, for example, approximately from 2 to 300 nm, preferably from 3 to 100 nm, more preferably from 5 to 50 nm, and most preferably from 10 to 30 nm.

The nitrogen adsorption specific surface area of the semiconductor particles in accordance with the BET method may be 1 m²/g or greater, and is, for example, approximately from 3 to 300 m²/g, preferably from 5 to 200 m²/g, more preferably from 10 to 100 m²/g, and most preferably from 30 to 80 m²/g.

As the ionic polymer, the ionic polymers illustrated in the section of the separator composition can be used, and the ionic polymer also has the same preferred aspects.

In the case where the photoelectric conversion element is a dye-sensitized solar cell, the photoelectric conversion layer further includes a dye in addition to the semiconductor and the ionic polymer.

The dye (dyestuff, pigment) is not particularly limited as long as the dye is a component that functions as a sensitizer (sensitizing dye or photosensitizing dye), and examples of the dye include organic dyes or inorganic dyes (for example, a carbon-based pigment, a chromate-based pigment, a cadmium-based pigment, a ferrocyanide-based pigment, a metal oxide-based pigment, a silicate-based pigment, and a phosphate-based pigment). These dyes can be used alone, or two or more thereof can be used in combination. Among these dyes, organic dyes are preferred, and ruthenium complex dyes are particularly preferred.

Note that the dye is typically included in the form that it is adhered to (or immobilized on) the semiconductor (or semiconductor surface) in the photoelectric conversion layer (or photoelectric conversion element). Examples of the aspect of the adherence (or immobilization) include adsorption (physisorption) and chemical bonding. Accordingly, for the dye, a dye that is likely to adhere to the semiconductor may be suitably selected. Also preferred are dyes having, as a ligand, a functional group such as a carboxyl group, an ester group, or a sulfo group (for example, a ruthenium dye having a carboxyl group, such as N719). Dyes with such a ligand are suitable because the dyes are likely to bind to semiconductor surfaces, such as a titanium oxide, and unlikely to desorb.

The proportion of the dye may be, for example, approximately from 0.001 to 1 parts by weight, preferably 0.005 to 0.5 parts by weight, more preferably 0.01 to 0.2 parts by weight, and most preferably 0.02 to 0.1 parts by weight, with respect to 1 part by weight of the semiconductor.

The photoelectric conversion layer can also be formed on a substrate (conductive substrate) by coating the substrate with the composition including the solvent and drying the composition in the same manner as for the separator.

Note that, as mentioned above, the dye may be contained in the photoelectric conversion layer by applying the semiconductor and the ionic polymer onto the substrate, and then causing the dye to adhere to the coating film including the semiconductor and the ionic polymer. Examples of the method for adherence of the dye include a method of spraying a solution containing the dye onto the coating film, and a method of immersing the substrate with the coating film formed in a solution containing the dye. Note that after the spraying or immersion, the same drying as mentioned above may be performed.

The thickness of the photoelectric conversion layer may be, for example, approximately from 0.1 to 100 µm, preferably from 0.5 to 50 µm, more preferably from 1 to 30 µm, and most preferably from 3 to 20 µm.

The laminate thus obtained has the conductive layer, the photoelectric conversion layer, and the separator, and can be used as a separator-equipped electrode that constitutes a photoelectric conversion element. The photoelectric conversion element will be described in detail below.

### [Photoelectric conversion element]

The photoelectric conversion element includes the laminate (separator-equipped electrode). More specifically, the photoelectric conversion element includes the laminate as a separator-equipped electrode. Typical examples of the photoelectric conversion element include a solar cell. In particular, in the case where the photoelectric conversion layer includes a dye, the photoelectric conversion element forms a dye-sensitized solar cell.

The solar cell according to an embodiment of the present invention includes the laminate as a separator-equipped electrode, and a counter electrode disposed to be opposed to the separator, and has an electrolyte interposed between the electrodes.

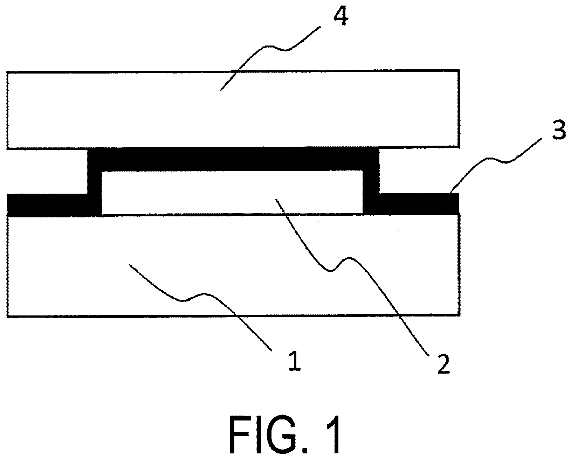

FIG. 1 is a schematic diagram illustrating an example of a stacked solar cell according to an embodiment the present invention. For this cell, a photoelectric conversion layer 2 is stacked on a main region of a conductive substrate 1, a membranous separator 3 is stacked on the exposed regions of the photoelectric conversion layer 2 and of the conductive substrate 1, and a counter electrode 4 is stacked thereon. In this example, an electrolyte solution is injected through the gap between the membranous separator 3 and the counter electrode 4, thereby also penetrating into voids inside the membranous separator 3. In this example, the both electrodes are opposed to each other with only the separator interposed therebetween, thus reducing the distance between the electrodes, and allowing the photoelectric conversion efficiency to be improved.

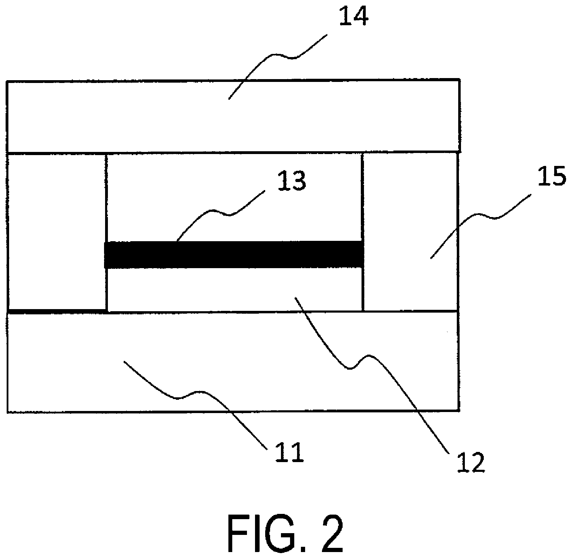

FIG. 2 is a schematic diagram illustrating an example of an opposed solar cell according to an embodiment of the present invention. For this cell, a conductive substrate 11 and a counter electrode 14 are opposed to each other with a spacer 15 formed therebetween on the edges of both electrodes, and a photoelectric conversion layer 12 and a membranous separator 13 are sequentially stacked on the conductive substrate 11. In this example, an electrolyte solution is enclosed in the gap between the membranous separator 13 and the counter electrode 14, thereby also penetrating into voids inside the membranous separator 13. The spacer 15 may be formed from a sealing material composed of, for example, a thermoplastic resin (such as an ionomer resin), a thermosetting resin (such as an epoxy resin and silicone resin), or the like.

Note that the counter electrode serves as a positive electrode or a negative electrode, depending on the type of the semiconductor constituting the separator-equipped electrode (or laminate). More specifically, the counter electrode forms a positive electrode (the laminate forms a negative electrode) in the case where the semiconductor is an n-type semiconductor, whereas the counter electrode forms a negative electrode (the laminate forms a positive electrode) in the case where the semiconductor is a p-type semiconductor.

The counter electrode is composed of, as for the laminate, a conductive substrate, and a catalyst layer (positive electrode catalyst layer or negative electrode catalyst layer) formed on the conductive substrate (or on the conductor layer of the conductive substrate). Note that in the case where the conductor layer has a reducing ability in addition to the conductivity, there is not always a need to provide the catalyst layer. Note that the counter electrode is adapted to oppose the surface of the conductor layer or catalyst layer to the laminate (or electrode). In the counter electrode, the conductive substrate may be the same substrate as mentioned above, or alternatively, a substrate obtained by forming, on s base substrate, a layer (conductive catalyst layer) that combines a conductor layer and a catalyst layer as described below. In addition, the catalyst layer (positive electrode catalyst layer or negative electrode catalyst layer) is not particularly limited, and can be formed from a conductive metal (such as gold or platinum), carbon, or the like.

The catalyst layer (positive electrode catalyst layer or negative electrode catalyst layer) may be a non-porous layer (or a non-porous layer) or may be a layer (porous layer) that has a porous structure. Such a porous layer (porous catalyst layer) may be composed of a porous catalyst component, or may be composed of a porous component and a catalyst component supported on the porous component or composed of a combination thereof. More specifically, the porous catalyst component is a component that has porosity and functions as a catalyst component (a component that has a combination of porosity and catalytic function). Note that in the latter aspect, the porous component may have a catalytic function.

Examples of the porous catalyst component include metal fine particles (for example, platinum black, and the like), and porous carbon [carbon black (carbon black aggregates) such as activated carbon, graphite, Ketjen black, furnace black, and acetylene black, and carbon nanotubes (carbon nanotube aggregates)]. These components may be used alone, or two or more thereof may be combined. Among the porous catalyst components, activated carbon and the like can be suitably used.

Examples of the porous component include, in addition to the porous carbon mentioned above, metal compound particles [for example, particles (fine particles) of conductive metal oxides (for example, tin-doped indium oxides and the like) illustrated in the section of the conductive substrate, and the like]. These components can be used alone, or two or more thereof can be used in a combination. Furthermore, examples of the catalyst component include conductive metals (for example, platinum).

The shapes (or forms) of the porous catalyst component and the porous component are not particularly limited, and may be particulate, fibrous, or the like, and is preferably particulate.

The average particle size of such particulate porous catalyst component and porous component (porous particles) may be, for example, approximately from 1 to 1000 µm, preferably from 10 to 500 µm, more preferably from 30 to 300 µm, and most preferably from 50 to 200 µm.

The nitrogen adsorption specific surface areas of the porous catalyst component and porous component in accordance with the BET method may be, for example, approximately from 1 to 4000 m²/g, preferably from 10 to 3000 m²/g, more preferably from 50 to 2000 m²/g, and most preferably from 100 to 1000 m²/g.

Note that the porous layer (porous catalyst layer) may include, if necessary, a binder component [for example, a thermoplastic resin such as a cellulose derivative (methyl cellulose); a thermosetting resin such as an epoxy resin], and the like.

The proportion of the binder component may be, for example, approximately from 0.1 to 50% by weight, preferably from 0.5 to 40% by weight, more preferably from 1 to 30% by weight, and most preferably from 3 to 20% by weight, with respect to the entire porous layer (porous catalyst layer).

The electrode including the porous layer is required to include at least the porous layer, which is typically at least composed of at least a substrate (a substrate that may be a conductive substrate) and a porous catalyst layer. Typical examples of the electrode including the porous layer includes: (i) an electrode (or laminate) composed of a conductive substrate (a base substrate with a conductor layer formed thereon, such as the conductive substrate illustrated above) and a porous catalyst layer formed on the conductive substrate (or conductor layer) and composed of a porous catalyst component; and (ii) an electrode (or laminate) composed of a base substrate (such as the base substrate illustrated above) and a porous catalyst layer formed on the base substrate and composed of a porous component and a catalyst component (for example, a porous component with a catalyst component supported thereon).

The thickness of the porous layer (porous catalyst layer) may be, for example, approximately from 0.1 to 100 µm, preferably 0.5 to 50 µm, and more preferably 1 to 30 µm.

The electrolyte constituting the electrolyte solution is not particularly limited, and examples of the electrolyte include general-purpose electrolytes, for example, a combination of a halogen (halogen molecule) and a halide salt [for example, a combination of bromine and a bromide salt, a combination of iodine and an iodide salt, and the like]. Examples of the counter ion (cation) constituting the halide salt include metal ions [for example, alkali metal ions (for example, lithium ions, sodium ions, potassium ions, cesium ions, and the like), alkaline earth metal ions (for example, magnesium ions, calcium ions, and the like), and the like], and quaternary ammonium ions [tetraalkyl ammonium salts, pyridinium salts, imidazolium salts (for example, 1,2-dimethyl-3-propylimidazolium salts), and the like] The electrolytes can be used alone, or two or more thereof can be used in combination.

Among these electrolytes, preferred electrolytes include combinations of iodine and iodide salts, in particular, combinations of iodine and metal iodide salts [for example, alkali metal salts (lithium iodides, sodium iodides, potassium iodides, and the like)], and combinations of iodine and quaternary ammonium salts.

The solvent constituting the electrolyte solution is not particularly limited, general-purpose solvents can be used, and examples thereof include alcohols (for example, alkanols such as methanol, ethanol, and butanol; glycols such as ethylene glycol, diethylene glycol, and polyethylene glycol), nitriles (such as acetonitrile, methoxyacetonitrile, propionitrile, 3-methoxypropionitrile, and benzonitrile), carbonates (such as ethylene carbonate, propylene carbonate, and diethyl carbonate), lactones (such as γ-butyrolactone), ethers (chain ethers such as 1,2-dimethoxyethane, dimethyl ether, and diethyl ether; cyclic ethers such as tetrahydrofuran, 2-methyltetrahydrofuran, dioxolane, and 4-methyldioxolane), sulfolanes (such as sulfolane), sulfoxides (such as dimethyl sulfoxide), amides (such as N, N-dimethylformamide and N, N-dimethylacetamide), and water. The solvents can be used alone, or two or more thereof can be used in combination.

Note that with the ionic polymer and the electrolyte solution in contact with each other (or with the ionic polymer present in the electrolyte solution) in the photoelectric conversion element, the pH of the ionic polymer is also preferably maintained in the photoelectric conversion element in the case of adjusting the pH of the ionic polymer. Specifically, the pH (25°C) of the electrolyte solution (the ionic polymer in the electrolyte solution) may be 3 or higher (for example, from 4 to 14), preferably 5 or higher (for example, from 6 to 14), and more preferably 7 or higher (for example, from 7 to 14). In particular, in the case where the ionic polymer is composed of an anionic polymer, the pH (25°C) of the electrolyte solution (the ionic polymer in the electrolyte solution) may be, for example, 3 or higher (for example, from 4 to 14), preferably 5 or higher (for example, from 5 to 13), more preferably 6 or higher (for example, from 6.5 to 12), and particularly, 7 or higher (for example, from 7 to 12), and may be typically approximately from 6 to 14 (for example, from 6.5 to 11, preferably from 7 to 9).

From the perspective of such pH adjustment, components that have no influence on the pH adjustment may be suitably used for the components constituting the electrolyte solution. For example, a neutral solvent or a non-acidic solvent (or an aprotic solvent) may be suitably used as the electrolyte solution.

Note that in the electrolyte solution, the concentration of the electrolyte may be, for example, approximately from 0.01 to 10 M, preferably from 0.03 to 8 M, more preferably from 0.05 to 5 M. In addition, in the case of combining a halogen (such as iodine) and a halide salt (such as an iodide salt), their ratio may be halogen/halide sale (molar ratio) = approximately from 1/0.5 to 1/100, preferably from 1/1 to 1/50, more preferably from 1/2 to 1/30.

The electrolyte is not limited to an electrolyte combined with a solvent, but may be a solid layer (or a gel) including an electrolyte. Examples of the electrolyte constituting the solid layer including an electrolyte include, in addition to the electrolytes illustrated above, solid electrolytes {for example, organic solid components such as resin components [for example, thiophene-based polymers (for example, polythiophene or the like), carbazole-based polymers (for example, poly(N-vinylcarbazole) and the like), and the like], and low-molecular-weight organic components (for example, naphthalene, anthracene, phthalocyanine, and the like); inorganic solid components such as silver iodide; and the like}. These components can be used alone, or two or more thereof can be used in a combination.

Note that the solid layer may be a solid layer that has an electrolyte or an electrolyte solution retained on a gel substrate [for example, a thermoplastic resin (such as a polyethylene glycol or a polymethyl methacrylate), a thermosetting resin (such as an epoxy resin), or the like].

### Examples

Hereinafter, the present invention is described in greater detail based on examples, but the present invention is not limited to these examples. Here are the raw materials and samples used in the examples and the comparative example.

### [Raw material and sample]

Titanium oxide particles A: "ST-41" available from ISHIHARA SANGYO KAISHA, LTD., average particle size: 200 nm, specific surface area: 10 m²/g
Titanium oxide particles B: "P25" available from NIPPON AEROSIL CO., LTD., average particle size: 21 nm, specific surface area: 50 m²/g
Silica nanoparticles: "Aerosil50" available from NIPPON AEROSIL CO., LTD., average particle size: approximately 30 nm, specific surface area: 50 m²/g
Alumina-coated titanium oxide particles: "R25" available from Sakai Chemical Industry Co., Ltd., average particle size: 200 nm
20% by weight Nafion dispersion: "Nafion DE2021" available from DuPont
Lithium hydroxide monohydrate: available from Tokyo Chemical Industry Co., Ltd.
Isopropanol: available from Tokyo Chemical Industry Co., Ltd.
compactTiO₂-layered FTO substrate: available from Astellatech, Inc.
N719 dye: available from solaronix
Spacer: "HIMILAN" available from Mitsui DuPont Polychemicals Co., Ltd., thickness: 50 µm

### Example 1

A 20% by weight Nafion dispersion was neutralized with an aqueous lithium hydroxide solution in which a lithium hydroxide monohydrate was dissolved in ion exchange water, thereby preparing a Nafion dispersion with a concentration of 5% by weight in ion exchange water. To 6 parts by weight of the 5 wt% Nafion dispersion, 1.8 parts by weight of the titanium oxide particles A and 2 parts by weight of isopropanol were added, and subjected to a dispersion treatment with an ultrasonic homogenizer to obtain a separator ink.

### Example 2

In the same manner as in Example 1 except for using 1.8 parts by weight of the silica nanoparticles instead of 1.8 parts by weight of the titanium oxide particles A in Example 1, a separator ink was obtained.

### Example 3

In the same manner as in Example 1 except for using 1.8 parts by weight of the alumina-coated titanium oxide particles instead of 1.8 parts by weight of the titanium oxide particles A in Example 1, a separator ink was obtained.

### Example 4

In the same manner as in Example 1 except for using 0.9 parts by weight of the titanium oxide particles A and 0.9 parts by weight of the silica nanoparticles instead of 1.8 parts by weight of the titanium oxide particles A in Example 1, a separator ink was obtained.

### Example 5

### (Preparation of a non-sintered photoelectric conversion ink)

A 20 wt% Nafion dispersion was neutralized to pH7 with an aqueous lithium hydroxide solution in which a lithium hydroxide monohydrate was dissolved in ion exchange water, thereby preparing a Nafion dispersion with a concentration of 5% by weight in ion exchanged water. To 6 parts by weight of the 5 wt% Nafion dispersion, 1.8 parts by weight of the titanium oxide particles B and 2 parts by weight of isopropanol were added, and subjected to a dispersion treatment with an ultrasonic homogenizer to obtain a photoelectric conversion ink.

### (Preparation of laminate)

After the FTO surface of the compactTiO₂-layered FTO substrate was subjected to UV ozone cleaning, the obtained photoelectric conversion ink was applied to the surface by a squeegee method. After applying the ink, the ink was dried for 1 minute at 120°C on a hot plate. The separator ink prepared in Example 1 was applied onto the obtained photoelectric conversion layer by a squeegee method. After applying the ink, the ink was dried for 1 minute at 120°C on a hot plate to obtain a laminate of photoelectric conversion layer/membranous separator.

### (Adsorption of dye)

The obtained laminate was immersed for 24 hours in a solution in which an N719 dye was dissolved in a mixed solvent (ratio by weight: 1/1) of acetonitrile and t-butanol. Thereafter, the laminate was washed with acetonitrile and air-dried to obtain a dye-adsorbed laminate.

### (Fabrication of solar cell)

A dye-sensitized solar cell with the structure illustrated in FIG. 2 was fabricated by fixing the separator surface of the dye-adsorbed laminate and a platinum surface of platinum-coated glass as a counter electrode with a spacer interposed therebetween, and filling, with an electrolyte solution, the void formed between the separator and the platinum surface. Note that an acetonitrile solution containing 0.05 M of iodine, 0.1 M of lithium iodide, 0.5 M of 1,2-dimethyl -3-propylimidazolium iodide, and 0.5 M of 4-tert-butylpyridine was used for the electrolyte solution.

### Example 6

### (Preparation of laminate and adsorption of dye)

After obtaining a laminate in the same manner as in Example 5 except for using the separator ink prepared in Example 2 instead of the separator ink prepared in Example 1, a dye-adsorbed laminate was obtained by the same method as in Example 5.

### (Fabrication of solar cell)

A dye-sensitized solar cell with the structure illustrated in FIG. 1 was fabricated by fixing the obtained laminate and platinum-coated glass as a counter electrode in such a manner that the separator and the platinum surface were brought into close contact with each other, and filling the void where the separator and the platinum surface were out of close contact with each other, with the same electrolyte solution as in Example 5.

### Example 7

In the same manner as in Example 6 except for using the separator ink prepared in Example 3 instead of the separator ink prepared in Example 2, a dye-sensitized solar cell with the structure shown in FIG. 1 was fabricated.

### Example 8

In the same manner as in Example 6 except for using the separator ink prepared in Example 4 instead of the separator ink prepared in Example 2, a dye-sensitized solar cell with the structure shown in FIG. 1 was fabricated.

### Comparative Example 1

### (Preparation of laminate and adsorption of dye)

After the FTO surface of the compactTiO₂-layered FTO substrate was subjected to UV ozone cleaning, the photoelectric conversion ink obtained in Example 5 was applied to the surface by a squeegee method. After the application, the ink was dried for 1 minute at 120°C on a hot plate to obtain a film of a photoelectric conversion layer, and the dye was then adsorbed by the same method as in Example 5, thereby fabricating a dye-sensitized solar cell with the structure illustrated in FIG. 2.

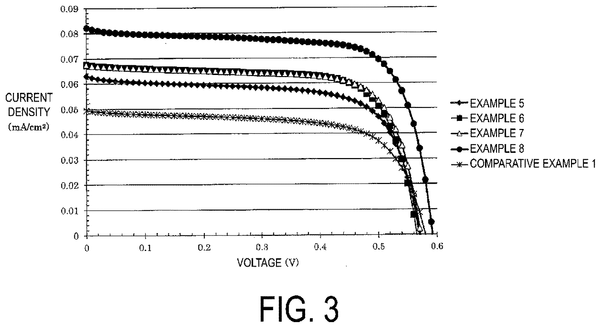

The dye-sensitized solar cells obtained in Examples 5 to 8 and Comparative Example 1 were evaluated under the condition of 1000 lux and 25°C with the use of an LED light ("LED Desk Lamp CDS-90a" from Cosmotechno Co., Ltd.) as a light source. Table 1 shows, as output characteristics, the evaluation results of the short-circuit current density (Jsc), the open circuit voltage (Voc), the fill factor (FF), and the output (Pmax) at the optimal operating point, and FIG. 3 shows a graph of comparison of the output characteristics.

**[Table 1]**

| | Thickness of Photoelectric Conversion Layer (µm) | Separator (µm) | Jsc (mA/cm²) | Voc (V) | FF | Pmax (mW/cm²) |
|---|---|---|---|---|---|---|
| Example 5 | 8.2 | 4.1 | 0.0630 | 0.579 | 0.696 | 0.0254 |
| Example 6 | 7.9 | 3.6 | 0.0676 | 0.565 | 0.710 | 0.0271 |
| Example 7 | 8.5 | 4.8 | 0.0675 | 0.571 | 0.712 | 0.0275 |
| Example 8 | 8.4 | 3.9 | 0.0822 | 0.592 | 0.716 | 0.0349 |
| Comparativ e Example 1 | 8.0 | - | 0.0495 | 0.580 | 0.666 | 0.0191 |

As is clear from the results of Table 1 and FIG. 3, the battery according to the examples were superior in output characteristics to the battery according to the comparative example, and above all, the battery according to Example 8 was particularly superior, possibly because of being thin and having a scattering function.

### Industrial Applicability

The separator composition according to the present invention can be utilized for forming separators of electrical storage elements such as various batteries, condensers, and capacitors, and above all, are particularly useful for forming separators of photovoltaic cells such as solar cells (in particular, dye-sensitized solar cells).

## Claims

1. A separator composition for forming a separator, the composition comprising: at least one type of non-conductor particles selected from polymer particles and ceramic particles; and an ionic polymer, and the ionic polymer having a proportion from 0.1 to 30 parts by weight with respect to 1 part by weight of the non-conductor particles.

2. The composition according to claim 1, wherein the non-conductor particles are inorganic oxide particles.

3. The composition according to claim 1 or 2, wherein the non-conductor particles comprise insulator particles, and the insulator particles has a proportion of 10% by volume or greater of the non-conductor particles.

4. The composition according to any of claims 1 to 3, wherein the non-conductor particles have an average particle size of 10 nm or greater.

5. The composition according to any of claims 1 to 4, wherein the ionic polymer is an anionic polymer.

6. The composition according to any of claims 1 to 5, wherein the ionic polymer is a strongly acidic ion exchange resin.

7. The composition according to any of claims 1 to 6, wherein the ionic polymer is an anionic polymer that has a pH of 5 or higher in an aqueous solution or a water dispersion at 25°C.

8. The composition according to claims 1 to 7, wherein a proportion of the ionic polymer is from 0.25 to 15 parts by weight with respect to 1 part by weight of the non-conductor particles.

9. The composition according to any of claims 1 to 8, wherein the non-conductor particles comprise non-conductor particles having a particle size of less than 100 nm and non-conductor particles having a particle size of 100 nm or greater, the ionic polymer has a pH of 6 or higher in an aqueous solution or a water dispersion at 25°C, and is a fluorine-containing resin having a sulfo group, and the ionic polymer has a proportion from 0.5 to 8 parts by weight with respect to 1 part by weight of the non-conductor particles.

10. A separator comprising the composition recited in any of claims 1 to 9.

11. The separator according to claim 10, wherein the separator is membranous.

12. A method of manufacturing the separator recited in claim 10 or 11, wherein a membranous separator is obtained by coating a support with the composition recited in any of claims 1 to 9 without sintering.

13. A laminate comprising a conductive substrate, a photoelectric conversion layer stacked on the conductive substrate, and the membranous separator recited in claim 11 stacked on the photoelectric conversion layer.

14. The laminate according to claim 13, wherein the membranous separator has an average thickness from 0.1 to 100 µm.

15. A photoelectric conversion element comprising the laminate recited in claim 13 or 14.
